# EUROPÄISCHE PATENTSCHRIFT

(11) **EP 0 706 872 B1**
(45) Veröffentlichungstag und Bekanntmachung des Hinweises auf die Patenterteilung: **03.01.2001**
(21) Anmeldenummer: 95115514.2
(22) Anmeldetag: 02.10.1995
(51) Int. Cl.: B29C 47/02, B05C 5/02

(54) **Verfahren und Vorrichtung zur Beschichtung von Rotationskörpern mit nicht geradlinig verlaufender Achse**
Method and device for coating revolution bodies having non-rectilinear axis
Procédé et dispositif de revêtement de corps de révolution à axe non rectiligne

(30) Priorität: 13.10.1994 DE 4436534
(43) Veröffentlichungstag der Anmeldung: 17.04.1996
(73) Patentinhaber: BAYER AG, 51368 Leverkusen (DE)
(72) Erfinder: Grimm, Wolfgang, D-51381 Leverkusen (DE); Giesselmann, Jürgen, D-51491 Overath (DE)

(56) Entgegenhaltungen:
- DE-A- 3 828 427
- GB-A- 2 109 891

## Beschreibung

Bei der Beschichtung von Rohren und Walzen, z. B. aus Stahl, mit Kunststoffen ist es bekannt, den Kunststoff in flüssiger Form auf den rotierenden Körper aufzutragen, wobei Rotationskörper und Auftragsvorrichtung linear so bewegt werden, daß die Beschichtungsmasse den Rotationskörper in Form einer gegebenenfalls überlappenden Wendel umgibt. Derartige Vorrichtungen sind beispielsweise in der DE-A-38 28 427 und der GB-A-2 109 891 beschrieben.

Insbesondere bei der Beschichtung längerer Rohre ergeben sich Probleme daraus, daß die Rohrachse nicht streng linear verläuft, sondern Durchbiegungen aufweist. Aufgrund solcher Durchbiegungen der Rohrachse würde das Rohr unter einer fest installierten Auftragsvorrichtung für die Beschichtungsmasse nicht nur rotieren, sondern auch Quer- und Abstandsbewegungen durchführen, die zu einem unregelmäßigen Auftrag der Beschichtungsmasse führen.

Aufgabe der vorliegenden Erfindung ist es, eine Vorrichtung zur Verfügung zu stellen, bei der die Auftragsvorrichtung quer zur Rohrachse derart beweglich angeordnet ist, daß die Auftragsvorrichtung ständig in bezug auf den Mittelpunkt der der Auftragsvorrichtung zugeordneten Umfangslinie des Rohres justiert wird, so daß gewährleistet ist, daß der Auftrag des Beschichtungsmittels auf das Rohr gleichmäßig erfolgt, auch wenn der Mittelpunkt des Rohrquerschnitts an der Stelle des Auftrags um die Drehachse des Rohres rotiert.

Gegenstand der vorliegenden Erfindung ist demgemäß eine Vorrichtung zur Außenbeschichtung von Rotationskörpern, die folgende Elemente enthält:
a) Mittel zur Halterung zum rotierenden Antrieb des zu beschichtenden Rotationskörpers, vorzugsweise Rohres,
b) mindestens eine bezüglich der Rotationsbewegung des Rotationskörpers ortsfeste Auftragsdüse für die Beschichtungsmasse,
c) Antriebsmittel zur relativen Bewegung von Düse und Körper in Achsrichtung des Körpers, wobei
d) die Düse an dem horizontalen Schenkel eines quer zu Düsenachse angeordneten Winkels befestigt ist,
e) wobei der Winkel mittels eines vertikal beweglichen, horizontalen Tragarms gegen eine Rückstelleinrichtung horizontal verschiebbar geführt ist,
f) die Einheit aus horizontalem Schenkel und Tragarm auf dem Körpers aufliegt und
e) der andere Schenkel des Winkels am Körper seitlich anliegt.

Die Mittel zur Halterung und zum rotierenden Antrieb des zu beschichtenden Rotationskörpers können beliebig gestaltet sein. Zum Beispiel kann der Körper beidseitig auf einen Dorn gespießt sein, wobei mindestens einer der Dorne rotierend antreibbar ist und der andere Dorn drehbar gelagert ist. Entsprechende Mittel stehen dem Fachmann zur Verfügung.

Die Austragsdüse für die Beschichtungsmasse ist in Abhängigkeit von der Art der Beschichtungsmasse ausgebildet. Besteht die Beschichtungsmasse aus einem thermoplastischen Polymer, so ist die Auftragsdüse im allgemeinen als Extruder gestaltet. Die Beschichtungsmasse wird dann bei erhöhter Temperatur, bei der diese flüssig ist, auf den Rotationskörper aufgebracht und erstarrt dort. Bevorzugt wird als Beschichtungsmasse eine Zweikomponentenreaktivbeschichtungsmasse eingesetzt, insbesondere Polyurethan. Dabei besteht die Auftragsvorrichtung aus einer Mischkammer für die beiden Reaktivkomponenten, im Falle des Polyurethans insIsocyanat und Polyol, wobei der Mischkammerauslaß als Auftragsdüse ausgebildet ist.

Vorzugsweise wird eine schlitzförmige Düse eingesetzt, wobei der Schlitz in einer Ebene, die die Achse des Rotationskörpers enthält, schräg zur Achse angestellt ist, so daß der Auftrag über mehrere Umdrehungen des Rohres überlappend erfolgt. Dabei ist besonders bevorzugt die Düse nicht genau oberhalb des Körpers angeordnet, sondern gegen die Drehrichtung des Körpers leicht seitlich versetzt. Eine besonders bevorzugte relative Anordnung von Breitschlitzdüse und rotierendem Rohr ist in der nicht vorveröffentlichten DE-A 4 325 653 der Anmelderin offenbart.

Ebenfalls beliebig können die Mittel zur relativen Bewegung von Düse und Rotationskörper in Achsrichtung gestaltet sein. Zum Beispiel kann die Düse längs des Körpers bewegt werden oder der Körper unter der ortsfesten Düse entlang bewegt werden.

Erfindungswesentliches Element ist die Halterung für die Auftragsdüse, bestehend aus Tragarm und Winkel. Dabei kann der Tragarm aus einem schwenkbar gelagerten Hebel bestehen, der auf der einen Seite über eine Achse in einer Ebene quer zur Achse des Rotationskörpers schwenkbar gelagert ist und mit der anderen Seite auf dem Körper aufliegt. Die vertikale Beweglichkeit des Tragarms ergibt sich dabei aus der Verschwenkbarkeit. Vorzugsweise soll der Tragarm eine Länge von mindestens dem doppelten Durchmessers des Rotationskörpers aufweisen, bevorzugt mindestens die dreifache Länge. Bevorzugt ist der Tragarm in Form eines Parallelogramms ausgebildet, so daß der Winkel bei der Schwenkbewegung des Tragarms seine Richtungsausrichtung beibehält.

Der Winkel, an dessen einen Schenkel die Auftragsdüse befestigt ist, weist vorzugsweise Schenkellängen auf, die dem 1,1- bis 2-fachen des Rohrradius entsprechen. Dabei wird der eine Schenkel mittels Schwalbenschwanz- oder Kugelführung mit dem Tragarm verschiebbar verbunden. Die Rückstelleinrichtung, gegen die der Winkel gegen den Tragarm verschiebbar ist, kann aus einer Rückstellfeder oder einer hydraulischen oder pneumatischen Rückstelleinrichtung bestehen. Die Rückstelleinrichtung stellt sicher, daß der andere Schenkel des Winkels am Rohr anliegt und aufgrund der Rückstellkraft der Rückstelleinrichtung jede Bewegung des Rohres mitvollzieht.

Die Erfindung wird anhand der nachfolgenden Figuren näher erläutert:

Figur 1 zeigt eine Seitenansicht des wesentlichen Aspektes der vorliegenden Erfindung.

Figuren 2, 3 und 4 zeigen Schnitte A-A durch die Darstellung gemäß Figur 1.

Figur 5 zeigt eine Ausführung der Erfindung, bei der Tragarm als Parallelogramm ausgebildet ist.

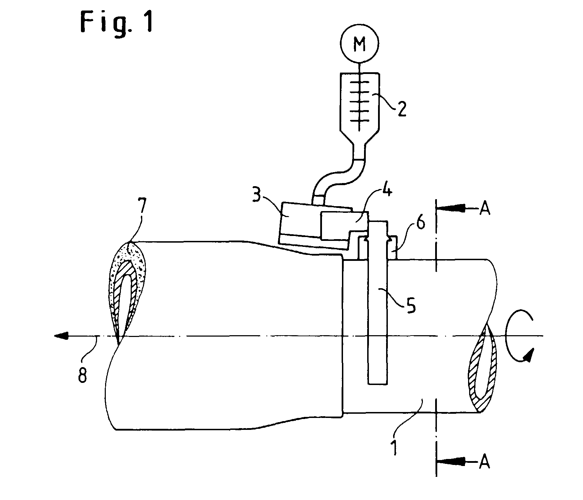

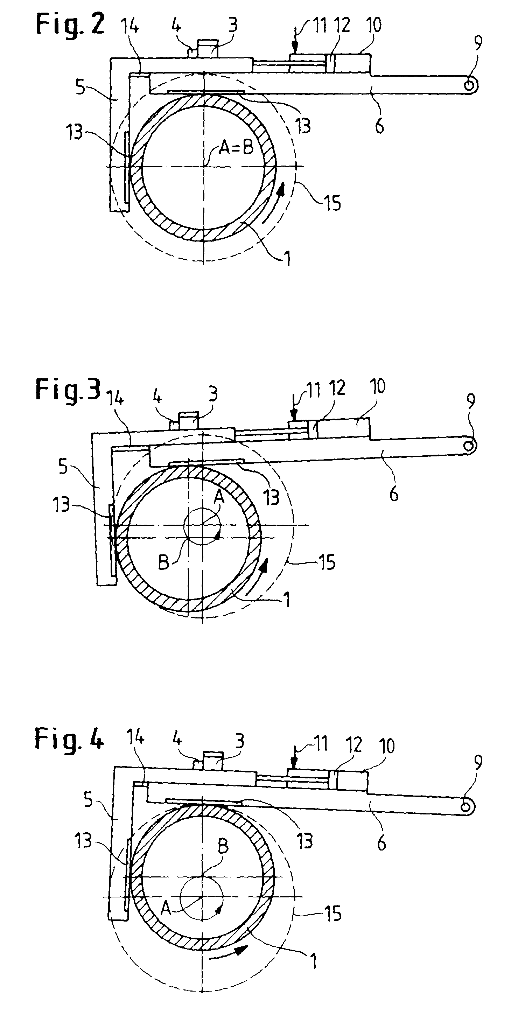

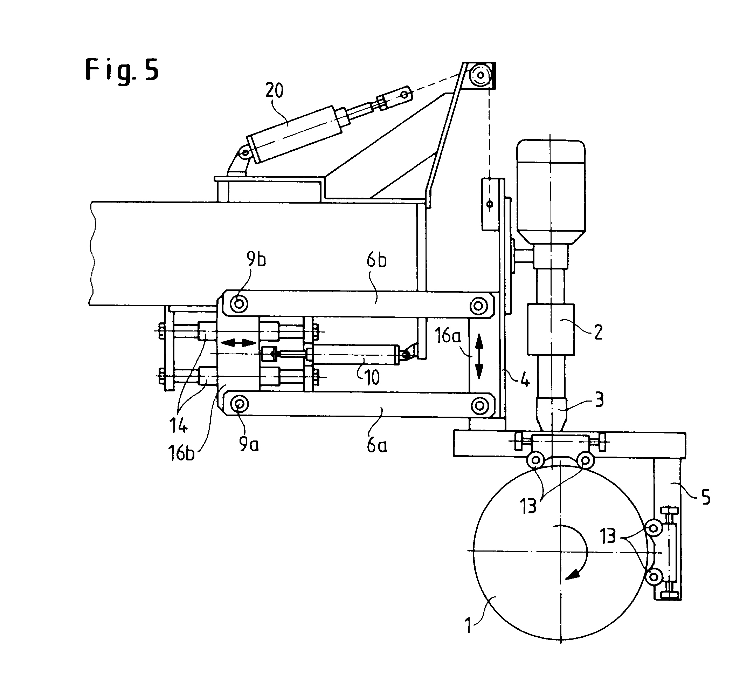

Die Figuren zeigen das rotierend angetriebene zu beschichtende Rohr 1, über dem ein Mischkopf 2 mit Austragsdüse 3 angeordnet ist. Die Düse 3 ist über eine Halterung 4, die z.B. die Einstellung des Anstellwinkels der Düse 3 erlaubt, mit dem Winkel 5 verbunden, der mittels Schwalbenschwanzführung 14 auf dem Tragarm 6 verschiebbar angeordnet ist. Der in Figur 1 linke des Teil des Rohres 1 ist bereits mit der Beschichtung 7 versehen. Das Rohr wird entsprechend Pfeil 8 gegen den Mischkopf im Zuge der Beschichtung bewegt. Wie aus den Figuren 2 bis 4 ersichtlich, ist der Tragarm 6 über eine Achse 9 schwenkbar gelagert. Ferner ist eine hydraulische Rückstellvorrichtung 10 vorgesehen, die wie durch Pfeil 11 angedeutet, mit einem unter Druck stehenden Fluid beaufschlagt wird, so daß der Kolben 12 in der Hydraulikeinrichtung in Richtung auf die Achse 9 des Tragarms bewegt wird, sobald der senkrechte Schenkel des Winkels 5 nicht am Rohr 1 anliegt. Die Anlageflächen 13 des Tragarms 6 und des Winkels 5 am Rohr können ferner mit Gleitflächen, z.B. Holzplatten bzw. Rollen versehen sein. Durch den gestrichelt gezeichneten Kreis 15 ist der Umfang des bereits beschichteten Rohres an der Stelle der drehbaren Lagerung des Rohres dargestellt. Der Mittelpunkt A des gestrichelten Kreises bezeichnet die Drehachse des Rohres. In den Figuren 3 und 4 liegt der Mittelpunkt B des Rohrquerschnitts 1 an der Auftragsstelle aufgrund einer Durchbiegung des Rohres nicht auf der Drehachse A. Aufgrund der Führung durch den am Rohr anliegenden Winkel 5 bleibt die Position der Düse 3 bezüglich des Mittelpunktes B erhalten. Geringfügige Abweichungen ergeben sich lediglich dadurch, daß der Tragarm 6 keine streng vertikale Bewegung durchführt, sondern eine Schwenkbewegung um die Achse 9. Jedoch sind die dadurch bedingten geringen Abweichungen bei üblichen Beschichtungsverfahren tolerierbar.

Gleiche Ziffern in Figur 5 wie in den vorhergehenden Figuren bezeichnen jeweils entsprechende Elemente.

Der Tragarm ist in Form eines Parallelogramms 6a, 6b, 16a, 16b ausgebildet. Der Parallelogrammschenkel 16a ist mit dem Winkel 5 fest verbunden und über die schwenkbar (9a, 9b) gelagerten Schenkel 6a und 6b vertikal beweglich.

Der vierte Schenkel 16 b des Parallelogramms ist mittels Führungsstangen 14 gegen die pneumatische Rückstelleinrichtung 10 horizontal beweglich. Ferner kann eine pneumatische Gewichtsentlastung 20 vorgesehen sein, die die Auflagekraft des Winkels 5 auf dem Rotationskörper 1 begrenzt.

## Patentansprüche

1. Vorrichtung zur Außenbeschichtung von Rotationskörpern (1), enthaltend Mittel zur Halterung und zum rotierenden Antrieb des zu beschichtenden Körpers (1), mindestens eine bezüglich der Rotationsbewegung des Körpers (1) ortsfeste Auftragsdüse (3) für die Beschichtungsmasse, Antriebsmittel zur relativen Bewegung von Düse und Rotationskörper in Achsenrichtung des Körpers (1), dadurch gekennzeichnet, daß die Düse an dem horizontalen Schenkel eines quer zur Düsenachse angeordneten Winkels befestigt ist, wobei der Winkel mittels eines vertikal beweglichen, horizontalen, quer zur Achse des Rotationskörpers (1) angeordneten Tragarms (6) gegen eine Rückstelleinrichtung (10) horizontal, quer zur Achse des Rotationskörpers (1) verschiebbar geführt ist, die Einheit aus horizontalem Schenkel und Tragarm (6) auf dem Rotationskörper (1) aufliegt und der andere Schenkel (5) des Winkels am Körper (1) seitlich anliegt.

2. Vorrichtung nach Anspruch 1, dadurch gekennzeichnet, daß der horizontale Tragarm (6) mit seiner nicht auf dem Rotationskörper (1) aufliegenden Seite in einer Achse (9) schwenkbar gelagert ist und die vertikale Bewegung durch Verschwenken des Tragarms (6) erfolgt.

3. Vorrichtung nach Anspruch 1 oder 2, dadurch gekennzeichnet, daß der eine Schenkel des Winkels mit dem Tragarm (6) mittels Schwalbenschwanz- oder Kugelführung (14) verbunden ist.

4. Vorrichtung nach einem der Ansprüche 1 bis 3, dadurch gekennzeichnet, daß die Rückstelleinrichtung (10) in Form einer Hydraulik oder Pneumatik mit konstanter Rückstellkraft ausgebildet ist.

5. Vorrichtung nach einem der Ansprüche 1 bis 4, dadurch gekennzeichnet, daß der Tragarm (6) als Parallelogramm ausgebildet ist, dessen einer vertikaler Schenkel (16a) mit dem Winkel fest verbunden ist und vertikal beweglich ist und dessen anderer vertikaler Schenkel (16b) mittels einer Führung (14) horizontal verschiebbar ist.

## Claims

1. Device for externally coating bodies of revolution (1), said device containing means for mounting and rotatably driving the body (1) to be coated, at least one coating compound application nozzle (3) which is stationary relative to the rotational movement of the body (1), drive means for the relative movement of nozzle and body of revolution in the axial direction of the body (1), characterised in that the nozzle is secured on the horizontal leg of an elbow disposed transversely to the nozzle axis, the elbow being guided so as to be displaceable horizontally, transversely to the axis of the body of revolution (1), towards a restoring device (10) by means of a vertically movable, horizontal support arm (6) disposed transversely to the axis of the body of revolution (1), the unit comprising the horizontal leg and support arm (6) resting on the body of revolution (1), and the other leg (5) of the elbow laterally abutting the body (1).

2. Device according to Claim 1, characterised in that the horizontal support arm (6) is pivotably mounted in a shaft (9) with its side not resting on the body of revolution (1), and the vertical movement is brought about by swivelling of the support arm (6).

3. Device according to Claim 1 or 2, characterised in that one leg of the elbow is connected to the support arm (6) by means of a dove-tail or ball-type guide (14).

4. Device according to one of Claims 1 to 3, characterised in that the restoring device (10) is in the form of a hydraulic or pneumatic system having constant restoring force.

5. Device according to one of Claims 1 to 4, characterised in that the support arm (6) is in the form of a parallelogram, of which one vertical leg (16a) is rigidly connected to the elbow and is vertically movable, and of which the other vertical leg (16b) is horizontally displaceable by means of a guide (14).

## Revendications

1. Dispositif pour le revêtement extérieur de corps de révolution (1), comportant des moyens destinés au maintien et à l'entraînement en rotation du corps de révolution (1) à revêtir, au moins une buse de déposition (3) pour la masse de revêtement, laquelle est stationnaire par rapport au mouvement de rotation du corps (1), des moyens d'entraînement destinés au mouvement relatif de la buse et du corps de révolution en direction axiale du corps (1), caractérisé en ce que la buse est fixée sur le bras horizontal d'une équerre agencée transversalement à l'axe de la buse, l'équerre étant guidée en déplacement horizontal à l'encontre d'un dispositif de rappel (10) transversalement à l'axe du corps de révolution (1) au moyen d'un bras porteur horizontal (6) mobile verticalement et agencé transversalement à l'axe du corps de révolution (1), et l'unité formée par le bras horizontal et par le bras porteur (6) repose sur le corps de révolution (1) et l'autre bras (5) de l'équerre s'appuie latéralement contre le corps (1).

2. Dispositif selon la revendication 1, caractérisé en ce que le bras porteur horizontal (6) est monté en basculement autour d'un axe (9) par son côté qui ne s'appuie pas sur le corps de révolution (1), et en ce que le mouvement vertical s'effectue par un basculement du bras porteur (6).

3. Dispositif selon l'une ou l'autre des revendications 1 et 2, caractérisé en ce que l'un des bras de l'équerre est relié au bras porteur (6) au moyen d'un guidage en queue d'aronde ou à billes (14).

4. Dispositif selon l'une quelconque des revendications 1 à 3, caractérisé en ce que le dispositif de rappel (10) est réalisé sous forme d'une unité hydraulique ou pneumatique à force de rappel constante.

5. Dispositif selon l'une quelconque des revendications 1 à 4, caractérisé en ce que le bras porteur (6) est réalisé sous forme de parallélogramme dont un bras vertical (16a) est solidaire de l'équerre et mobile verticalement et dont l'autre bras vertical (16b) est mobile horizontalement au moyen d'un guidage (14).
